# EUROPÄISCHE PATENTSCHRIFT

(11) **EP 2 013 516 B1**
(45) Veröffentlichungstag und Bekanntmachung des Hinweises auf die Patenterteilung: **16.09.2009**
(21) Anmeldenummer: 07726532.0
(22) Anmeldetag: 27.02.2007
(51) Int. Cl.: F16H 61/04

(54) **VERFAHREN ZUM BETREIBEN EINES AUTOMATGETRIEBES**
METHOD FOR OPERATING AN AUTOMATIC GEARBOX
PROCÉDÉ POUR FAIRE FONCTIONNER UNE BOÎTE DE VITESSES AUTOMATIQUE

(30) Priorität: 31.03.2006 DE 102006014941
(43) Veröffentlichungstag der Anmeldung: 14.01.2009
(73) Patentinhaber: ZF Friedrichshafen AG, 88038 Friedrichshafen (DE)
(72) Erfinder: POPP, Christian, 88079 Kressbronn (DE); STEINHAUSER, Klaus, 88079 Kressbronn (DE); SCHMIDT, Thilo, 88074 Meckenbeuren (DE); SCHIELE, Peter, 88079 Kressbronn (DE); ALLGAIER, Bernd, 88079 Kressbronn (DE)
(86) Internationale Anmeldenummer: PCT/EP2007/051833
(87) Internationale Veröffentlichungsnummer: WO 2007/113058

(56) Entgegenhaltungen:
- EP-A- 1 416 194
- EP-A2- 0 564 016
- EP-A2- 0 736 706
- DE-A1- 4 334 172
- DE-A1- 10 043 510

## Beschreibung

Die Erfindung betrifft ein Verfahren zum Betreiben eines Automatgetriebes nach einem der Oberbegriffe der Ansprüche 1, 2, 4, 6, 7 oder 8 und wie es in der EP 0 564 016 A2 beschrieben ist.

Fahrzeuge benötigen Getriebe, um Drehmomente und Drehzahlen zu wandeln. Aufgabe eines Fahrzeuggetriebes ist es, das Zugkraftangebot eines Antriebsaggregats umzusetzen. Die hier vorliegende Erfindung betrifft ein Verfahren zum Betreiben eines Automatgetriebes. Im Sinne der hier vorliegenden Erfindung sollen unter dem Begriff Automatgetriebe alle Getriebe mit einem automatischen Gangwechsel verstanden werden, die auch als Stufenautomatgetriebe bezeichnet werden.

Bei der Entwicklung von Automatgetrieben ist ein Trend nach einer sich zunehmend vergrößernden Ganganzahl für insbesondere die Vorwärtsgänge eines Automatgetriebes feststellbar. So befinden sich derzeit Automatgetriebe mit acht Vorwärtsgängen und einem Rückwärtsgang in der Entwicklung, wobei solche Automatgetriebe über mindestens fünf Schaltelemente verfügen, und wobei zur Momentübertragung bzw. Kraftübertragung an einem solchen Automatgetriebe mindestens drei dieser mindestens fünf Schaltelemente in einem Vorwärtsgang sowie in einem Rückwärtsgang geschlossen sind. Beim sogenannten Gangeinlegen von einer Neutralposition in einen Vorwärtsgang bzw. einen Rückwärtsgang an einem derartigen Automatgetriebe muss die Momentübertragung bzw. Kraftübertragung sicher und schonend geschlossen werden. Bislang sind jedoch keine Verfahren zum Betreiben solcher Automatgetriebe bekannt, die ein sicheres und schonendes Gangeinlegen an solchen Automatgetrieben gewährleisten.

Hiervon ausgehend liegt der vorliegenden Erfindung das Problem zu Grunde, ein neuartiges Verfahren zum Betreiben eines Automatgetriebes zu schaffen.

Das Problem wird durch die Merkmale einer der Ansprüche 1, 2, 4, 6, 7 oder 8 gelöst.

Bevorzugte Weiterbildungen der Erfindung ergeben sich aus den Unteransprüchen und der nachfolgenden Beschreibung. Ausführungsbeispiele der

Erfindung werden, ohne hierauf beschränkt zu sein, an Hand der Zeichnung näher erläutert. Dabei zeigt:
- Fig. 1: ein Getriebeschema eines Automatgetriebes mit fünf Schaltele- menten, bei welchem das erfindungsgemäße Verfahren vorteil- haft verwendbar ist;
- Fig. 2: eine Schaltelementmatrix für die Schaltelemente des Getriebe- schemas der Fig. 1 zur Verdeutlichung welche Schaltelemente in welchem Gang geschlossen sind;
- Fig. 3: ein Ablaufdiagramm zum Gangeinlegen von einer Neutralpositi- on in einen Vorwärtsgang nach einer Alternative eines ersten Aspekts der hier vorliegenden Erfindung;
- Fig. 4: ein Ablaufdiagramm zum Gangeinlegen von einer Neutralpositi- on in einen Vorwärtsgang nach einer weiteren Alternative des ersten Aspekts der hier vorliegenden Erfindung;
- Fig. 5: ein Ablaufdiagramm zum Gangeinlegen von einem Rückwärts- gang in einen Vorwärtsgang nach einer Alternative des ersten Aspekts der hier vorliegenden Erfindung;
- Fig. 6: ein Ablaufdiagramm zum Gangeinlegen von einem Rückwärts- gang in einen Vorwärtsgang nach einer weiteren Alternative des ersten Aspekts der hier vorliegenden Erfindung.

Die hier vorliegende Erfindung betrifft ein Verfahren zum Betreiben eines Automatgetriebes.

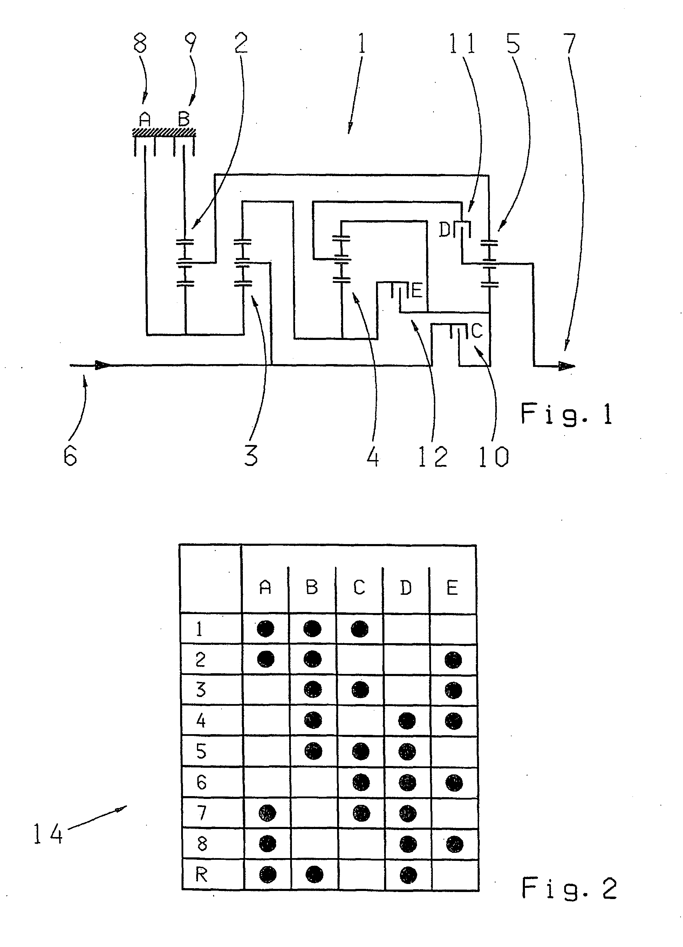

Fig. 1 zeigt ein Getriebeschema 1 eines Stufenautomatgetriebes, bei welchem das erfindungsgemäße Verfahren zum Betreiben eines Automatgetriebes bevorzugt Verwendung findet. So verfügt das Automatgetriebe der Fig. 1 über insgesamt vier Getrieberadsätze 2, 3, 4 und 5, um ein an einem Getriebeeingang 6 anliegendes Getriebeeingangsmoment in ein Getriebeausgangsmoment an einem Getriebeausgang 7 umzusetzen. Die Getrieberadsätze 2, 3, 4 und 5 des Automatgetriebes sind dabei gemäß Fig. 1 als Planetenrad-Getrieberadsätze ausgeführt.

Gemäß dem Getriebeschema 1 der Fig. 1 verfügt das Automatgetriebe neben den vier Getrieberadsätzen 2 bis 5 weiterhin über insgesamt fünf Schaltelemente 8, 9,10,11 und 12, wobei das Schaltelement 8 auch als Schaltelement A, das Schaltelement 9 auch als Schaltelement B, das Schaltelement 10 auch als Schaltelement C, das Schaltelement 11 auch als Schaltelement D und das Schaltelement 12 auch als Schaltelement E bezeichnet wird.

Bei dem Schaltelement A sowie Schaltelement B handelt es sich jeweils um Bremsen, bei den Schaltelementen C, D und E handelt es sich jeweils um Kupplungen. Die Schaltelemente 8 bis 12 sind an sich bekannte Schaltelemente des Getrieberadsatzsystems.

Für das in Fig. 1 schematisiert dargestellte Automatgetriebe, welches die fünf Schaltelemente A bis E umfasst, können unter Verwendung der z. B. in Fig. 2 dargestellten Schaltungsmatrix 14 acht Vorwärtsgänge sowie ein Rückwärtsgang realisiert werden. In der linken Spalte der Schaltungsmatrix 14 sind die acht Vorwärtsgänge "1" bis "8" sowie der Rückwärtsgang "R" und in der oberen Zeile der Schaltungsmatrix 14 die Schaltelemente A bis E aufgetragen. Schaltelemente, die in der Schaltelementmatrix 14 mit einem Punkt markiert sind, sind im jeweiligen Gang geschlossen. In jedem Vorwärtsgang sowie im Rückwärtsgang sind demnach jeweils drei der fünf Schaltelemente geschlossen, so z. B. für den Vorwärtsgang "1" die Schaltelemente A, B und C sowie für den Rückwärtsgang "R" die Schaltelemente A, B und D. Die jeweils anderen Schaltelemente sind hingegen vollständig geöffnet.

Zur Kraftübertragung bzw. Drehmomentübertragung vom Getriebeeingang 6 auf den Getriebeausgang 7 sind demnach bei dem in Fig. 1 dargestellten Automatgetriebe in jedem Gang drei Schaltelemente vollständig geschlossen, zwei Schaltelemente sind hingegen vollständig geöffnet. Die hier vorliegende Erfindung stellt nun ein Verfahren zum Betreiben eines solchen Automatgetriebes beim sogenannten Gangeinlegen bereit.

Nach einem ersten Aspekt der hier vorliegenden Erfindung wird beim sogenannten Gangeinlegen zur Überführung des Automatgetriebes von einer Neutralposition in einen Vorwärtsgang oder in einen Rückwärtsgang mindestens eines der im jeweiligen Vorwärtsgang bzw. Rückwärtsgang geschlossenen Schaltelemente des Automatgetriebes modulierend geschlossen.

Bei diesem beim Gangeinlegen modulierend zu schließenden Schaltelement handelt es sich um ein die Momentübertragung bzw. Kraftübertragung des Automatgetriebes herstellendes Schaltelement handelt, welches erst dann geschlossen wird, wenn die anderen im jeweiligen Vorwärtsgang bzw. Rückwärtsgang geschlossenen Schaltelemente bereits geschlossen sind. Die konkrete Vorgehensweise beim Gangeinlegen hängt dabei davon ab, in welchem Zustand sich die Schaltelemente in der Neutralposition befinden, so dass zwischen mehreren Alternativen dieses Aspekts der hier vorliegenden Erfindung unterschieden werden muss.

Nach einem ersten Aspekt der hier vorliegenden Erfindung sind in der Neutralposition eines Automatgetriebes alle im jeweiligen Vorwärtsgang bzw. Rückwärtsgang geschlossenen Schaltelemente vollständig geöffnet, wobei dies insbesondere dann der Fall ist, wenn in der Neutralposition Wert auf Sicherheit gegen Mehrfachfehler gelegt wird, wenn eine hydraulische Haftefunktion, z. B. bei Einfalt in einen Notlauf, zum Einlegen einer Fahrposition führen würde, oder wenn dies aus Gründen der Getriebemechanik, z. B. wegen interner Drehzahlverhältnisse, erforderlich ist.

Im gezeigten Ausführungsbeispiel findet die erste Alternative des ersten Aspekts der hier vorliegenden Erfindung dann Anwendung, wenn ein Automatgetriebe ausgehend vom Vorwärtsgang "6" in die Neutralposition überführt worden ist.

Soll in diesem Fall ein Gangeinlegen von der Neutralposition in einen Vorwärtsgang erfolgen, so werden zuerst zwei der drei vollständig geöffneten Schaltelemente gleichzeitig oder zeitlich versetzt geschlossen, anschließend wird das die Momentübertragung bzw. Kraftübertragung des Automatgetriebes herstellende, dritte Schaltelement modulierend geschlossen.

Eine zweite Alternative des ersten Aspekts der hier vorliegenden Erfindung zum Gangeinlegen an einem Automatgetriebe betrifft den Fall, in welchem ein erstes der im jeweiligen Vorwärtsgang bzw. Rückwärtsgang geschlossenen Schaltelemente in der Neutralposition ebenfalls geschlossen ist, ein zweites und ein drittes der im jeweiligen Vorwärtsgang bzw. Rückwärtsgang geschlossenen Schaltelemente in der Neutralposition hingegen vollständig geöffnet sind.

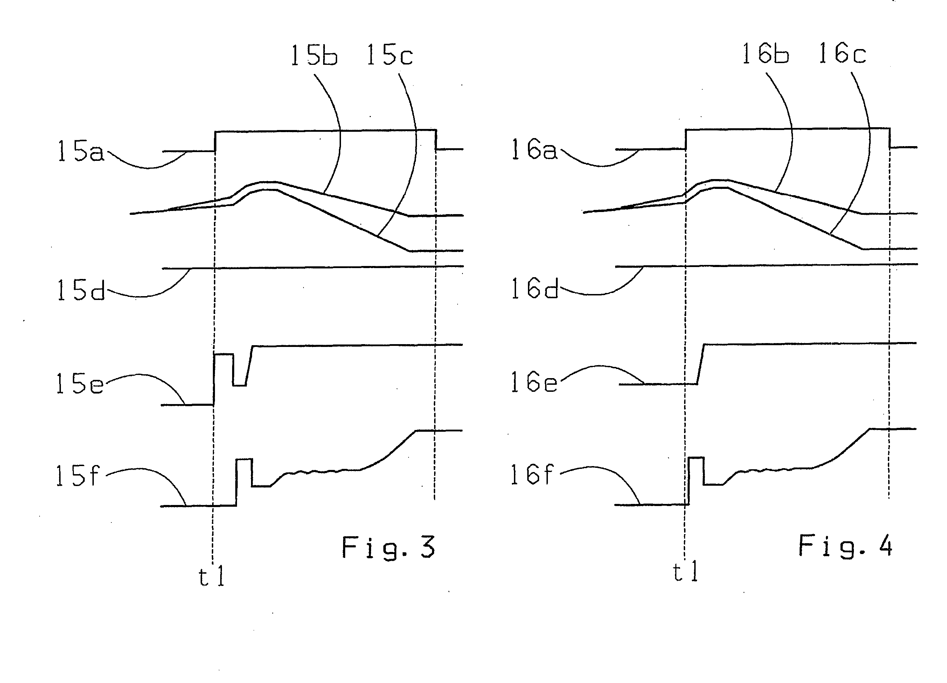

Die dann zur Anwendung kommende Vorgehensweise beim Gangeinlegen zur Überführung des Automatgetriebes von der Neutralposition in einen Vorwärtsgang bzw. Rückwärtsgang wird nachfolgend unter Bezugnahme auf Fig. 3 beschrieben, wobei Fig. 3 insgesamt sechs zeitliche Signalabläufe 15a, 15b, 15c, 15d, 15e und 15f zeigt. Der Signalverlauf 15a visualisiert eine Schaltungsanforderung im Sinne eines Gangeinlegen zum Zeitpunkt t₁, die Signalverläufe 15d, 15e und 15f visualisieren das Verhalten bzw. die Ansteuerung der nach dem Gangeinlegen im entsprechenden Vorwärtsgang bzw. Rückwärtsgang geschlossenen Schaltelemente Der Signalverlauf 15b visualisiert den sich einstellenden Motordrehzahlverlauf, der zeitliche Verlauf 15c zeigt hingegen den sich einstellenden Getriebeeingangsdrehzahlverlauf.

Wie Fig. 3 entnommen werden kann, wird in dem Fall, in welchem in der Neutralposition eines der im jeweiligen Vorwärtsgang bzw. Rückwärtsgang geschlossenen Schaltelemente ebenfalls geschlossen ist (siehe Signalverlauf 15d) und die beiden anderen im jeweiligen Vorwärtsgang bzw. Rückwärtsgang geschlossenen Schaltelemente in der Neutralposition vollständig geöffnet sind (siehe Signalverläufe 15e und 15f), zur Überführung des Automatgetriebes von der Neutralposition in einen Vorwärtsgang bzw. Rückwärtsgang zum Zeitpunkt t₁, in welchem eine Schaltanforderung im Sinne des Gangeinlegens anliegt, zuerst eines der beiden in der Neutralposition vollständig geöffneten Schaltelemente schnellbefüllt (siehe Signalverlauf 15e), wobei dieses Schaltelement durch die Schnellbefüllung vom vollständig geöffneten Zustand in einen teilbefüllten Zustand überführt wird.

Im teilbefüllten Zustand überträgt dasselbe kein oder annähernd kein Drehmoment, wobei ein Luftspiel desselben überwunden bzw. überbrückt ist. Nach dem Schnellbefüllen eines dieser beiden Schaltelemente wird das andere der beiden Schaltelemente, die in der Neutralposition vollständig geöffnet sind, ebenfalls durch Schneilbefüllung in einen teilbefüllten Zustand überführt, in welchem dasselbe kein oder annähernd kein Drehmoment überträgt, wobei gleichzeitig hierzu das andere der beiden Schaltelemente (siehe Signalverlauf 15e) vollständig geschlossen wird. Anschließend wird gemäß dem Signalverlauf 15f das noch teilbefüllte Schaltelement, welches die Momentübertragung bzw. Kraftübertragung des Automatgetriebes herstellt, modulierend geschlossen.

Diese zweite Alternative des ersten Aspekts der hier vorliegenden Erfindung zum Gangeinlegen findet vorzugsweise dann Verwendung, wenn in der Neutralposition Sicherheit gegenüber Einfachfehlern gewährleistet werden soll, bei gleichzeitig ausreichender Reaktionszeit beim anschließenden Gangeinlegen.

Im gezeigten Ausführungsbeispiel findet die zweite Alternative des ersten Aspekts der hier vorliegenden Erfindung dann Anwendung, wenn das Automatgetriebe vor dem Gangeinlegen ausgehend vom Vorwärtsgang "3" oder vom Vorwärtsgang "4" oder vom Vorwärtsgang "5" oder vom Vorwärtsgang "7" oder vom Vorwärtsgang "8" in die Neutralposition überführt worden ist bzw. das Automatgetriebe ausgehend von der Neutralposition desselben in einen dieser Vorwärtsgänge durch Gangeinlegen überführt werden soll.

Eine dritte Alternative des ersten Aspekts der Erfindung zum Gangeinlegen an einem Automatgetriebe betrifft den Fall, in welchem ein erstes der im jeweiligen Vorwärtsgang bzw. Rückwärtsgang geschlossenen Schaltelemente in der Neutralposition geschlossen ist, ein zweites der im jeweiligen Vorwärtsgang bzw. Rückwärtsgang geschlossenen Schaltelemente in der Neutralposition derart teilbefüllt ist, dass dasselbe in der Neutralposition kein oder annähernd kein Drehmoment überträgt, und ein drittes der im jeweiligen Vorwärtsgang bzw. Rückwärtsgang geschlossenen Schaltelemente in der Neutralposition vollständig geöffnet ist. Die erfindungsgemäße Vorgehensweise für diesen Fall wird nachfolgend unter Bezugnahme auf Fig. 4 beschrieben, wobei Fig. 4 in Analogie zur Fig. 3 wiederum sechs zeitliche Signalverläufe 16a, 16b, 16c, 16d, 16e und 16f zeigt. Der Signalverlauf 16d entspricht dabei dem Verhalten bzw. der Ansteuerung des ersten Schaltelements, welches in der Neutralposition geschlossen ist, der Signalverlauf 16e entspricht dem Verhalten des zweiten Schaltelements, welches in der Neutralposition teilbefüllt ist, und der Signalverlauf 16f entspricht dem dritten Schaltelement, welches in der Neutralposition vollständig geöffnet ist. Der zeitliche Signalverlauf 16a visualisiert wiederum das Anliegen einer Schaltungsanforderung im Sinne eines Gangeinlegens zum Zeitpunkt t₁, der Signalverlauf 16b verdeutlicht den Motordrehzahlverlauf, der Signalverlauf 16c zeigt den Getriebeeingangsdrehzahlverlauf.

Nach dieser dritten Alternative des ersten Aspekts der hier vorliegenden Erfindung wird zur Überführung des Automatgetriebes von der Neutralposition in einen Vorwärtsgang bzw. Rückwärtsgang beim Gangeinlegen gemäß dem Signalverlauf 16e vorzugsweise zuerst das zweite Schaltelement, welches in der Neutralposition teilbefüllt ist, geschlossen, wobei dann anschließend gemäß dem Signalverlauf 16f das die Momentübertragung bzw. die Kraftübertragung des Automatgetriebes herstellende dritte Schaltelement modulierend geschlossen wird, und zwar derart, dass ausgehend vom vollständig geöffneten Zustand dasselbe durch eine Schnellbefüllung auf einen teilbefüllten Zustand überführt und von dort aus modulierend geschlossen wird.

Im Unterschied zu der in Fig. 4 dargestellten Vorgehensweise ist es in der dritten Alternative des ersten Aspekts der hier vorliegenden Erfindung jedoch auch möglich, zur Überführung des Automatgetriebes von der Neutralposition in den Vorwärtsgang bzw. Rückwärtsgang zuerst das dritte Schaltelement zu schließen und anschließend dass die Momentübertragung bzw. Kraftübertragung des Automatgetriebes herstellende zweite Schaltelement modulierend zu schließen. Dies erfolgt vorzugsweise dann, wenn Zusatzfunktionalitäten, wie eine Standabkopplungsfunktion, realisiert werden sollen.

Die dritte Alternative des ersten Aspekts der hier vorliegenden Erfindung findet vorzugsweise dann zum Gangeinlegen Verwendung, wenn in der Neutralposition ausreichend Sicherheit gegenüber Einfachfehlern gewährleistet werden soll, was zumindest bedeutet, dass ein Fahrzeuganrollen nicht möglich ist, und gleichzeitig eine gute Reaktionszeit bei einem anschließenden Gangeinlegen vorhanden sein soll.

Im gezeigten Ausführungsbeispiel findet die dritte Alternative des ersten Aspekts der hier vorliegenden Erfindung dann Anwendung, wenn das Automatgetriebe zuvor ausgehend vom Vorwärtsgang "1" oder Vorwärtsgang "2" oder vom Rückwärtsgang "R" in die Neutralposition überführt worden ist, bzw. von der Neutralposition in einen dieser Gänge durch Gangeinlegen überführt werden soll.

Die obigen drei Alternativen des ersten Aspekts der hier vorliegenden Erfindung werden abhängig von der jeweiligen Neutralposition, von welcher aus das Automatgetriebe in einen Gang überführt werden soll, vorzugsweise in Kombination miteinander zum Betreiben eines Automatgetriebes beim Gangeinlegen verwendet.

So wird für die Neutralpositionen, von denen aus standardmäßig ein Gangeinlegen absolviert wird, die Alternative (dritte Alternative) gewählt, welche die beste Reaktionszeit bietet. Für die anderen Neutralpositionen, in welchen ein Gangeinlegen standardmäßig nur während der Fahrt vorgenommen wird, wird die Alternative (zweite Alternative) gewählt, die den größeren Schwerpunkt auf Sicherheit legt, da dann die Reaktionszeit nicht so kritisch ist.

Sollten hydraulische bzw. getriebemechanische Gründe vorhanden sein, die es nicht erlauben, ein Schaltelement geschlossen zu halten, so wird die erste Alternative gewählt.

Eine vierte Alternative des ersten Aspekts der hier vorliegenden Erfindung betrifft den Fall, in welchem zwei im jeweiligen Vorwärtsgang bzw. Rückwärtsgang geschlossene Schaltelemente in der Neutralposition ebenfalls geschlossen sind, und lediglich eines der im jeweiligen Vorwärtsgang bzw. Rückwärtsgang geschlossenen Schaltelemente in der Neutralposition vollständig geöffnet ist. Nach dieser Alternative wird dann das in der Neutralposition vollständig geöffnete Schaltelement zur Überführung des Automatgetriebes von der Neutralposition in einen Vorwärtsgang bzw. in einen Rückwärtsgang modulierend geschlossen, und zwar vorzugsweise derart, dass dieses Schaltelement zuerst durch eine Schnellbefüllung vom vollständig geöffneten Zustand in einen teilbefüllten Zustand überführt und dann ausgehend vom teilbefüllten Zustand, in welchem dasselbe kein oder annähernd kein Drehmoment überträgt, modulierend geschlossen wird.

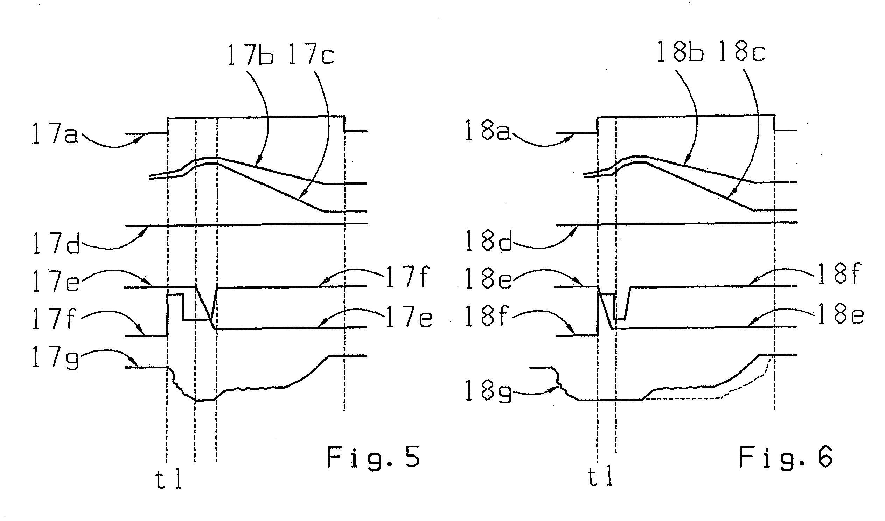

Fig. 5 visualisiert die erfindungsgemäße Vorgehensweise beim Gangeinlegen vom Rückwärtsgang "R" in den Vorwärtsgang "1" bzw. vom Vorwärtsgang "1" in den Rückwärtsgang "R", also unter Wechsel der kraftschlussrichtungsbestimmenden Schaltelemente des Automatgetriebes, wobei Fig. 5 insgesamt sieben zeitliche Signalverläufe 17a, 17b, 17c, 17d, 17e, 17f und 17g zeigt. Gemäß dem Signalverlauf 17a liegt im Zeitpunkt t₁ eine Schaltungsanforderung im Sinne eines Gangeinlegens vom Rückwärtsgang in den Vorwärtsgang bzw. vom Vorwärtsgang in den Rückwärtsgang vor, wobei der Signalverlauf 17b den sich einstellenden Motordrehzahlverlauf und Signalverlauf 17c den sich einstellenden Getriebeeingangsdrehzahlverlauf visualisiert.

Eines der Schaltelemente bleibt gemäß dem Signalverlauf 17d beim Gangeinlegen von Rückwärtsgang "R" in den Vorwärtsgang "1" bzw. vom Vorwärtsgang "1" in den Rückwärtsgang "R" dauerhaft geschlossen, wobei es sich bei diesem Schaltelemente unter Bezugnahme auf Fig. 1 und 2 insbesondere um das Schaltelement A handelt. Ein zweites Schaltelement, insbesondere das Schaltelement B, wird zur Ausführung des Gangeinlegens von Rückwärtsgang "R" in den Vorwärtsgang "1" bzw. vom Vorwärtsgang "1" in den Rückwärtsgang "R" gemäß dem Signalverlauf 17g vom geschlossenen Zustand zwischenzeitlich in einen teilbefüllten Zustand überführt, in welchem dieses Schaltelement kein oder annähernd kein Drehmoment überträgt. Während dieses Zeitraums, in welchem das durch den Signalverlauf 17g repräsentierte Schaltelement kein oder annähernd kein Drehmoment überträgt, kann zur Durchführung des Gangwechsels vom Rückwärtsgang "R" in den Vorwärtsgang "1" bzw. vom Vorwärtsgang "1" in den Rückwärtsgang "R" ein Wechsel zwischen den dritten Schaltelementen durchgeführt werden, wobei es sich bei diesen Schaltelementen um die Schaltelemente C und D handelt.

Dann, wenn ein Wechsel vom Rückwärtsgang "R" in den Vorwärtsgang "1" durchgeführt wird, visualisiert der Signalverlauf 17e die Ansteuerung des Schaltelements D und der Signalverlauf 17f die Ansteuerung des Schaltelements C, dann hingegen, wenn ein Gangwechsel vom Vorwärtsgang "1" in den Rückwärtsgang "R" durchgeführt werden soll, visualisiert der Signalverlauf 17e die Ansteuerung des Schaltelements C und der Signalverlauf 17f die Ansteuerung des Schaltelements D.

Fig. 6 verdeutlicht anhand von ebenfalls sieben Signalverläufen 18a, 18b, 18c, 18d, 18e, 18f und 18g die Vorgehensweise beim Gangeinlegen vom Rückwärtsgang "R" in den Vorwärtsgang "1" bzw. vom Vorwärtsgang "1" in den Rückwärtsgang "R" in Analogie zu Fig. 5, wenn zusätzlich weitere Funktionalitäten, wie z. B. eine Standabkopplungsfunktion, umgesetzt werden soll.

In diesem Fall wird dann, wie dem Signalverlauf 18g der Fig. 6 entnommen werden kann, das die Momentübertragung bzw. Kraftübertragung des Automatgetriebes herstellende Schaltelement bereits zeitlich vor dem Anliegen der Schaltungsanforderung zum Zeitpunkt t₁ in einen teilbefüllten Zustand überführt, und zwar derart, dass dasselbe kein oder annähernd kein Drehmoment überträgt. Das nach Durchführung des Gangeinlegens vom Rückwärtsgang "R" in den Vorwärtsgang "1" bzw. vom Vorwärtsgang "1" in den Rückwärtsgang "R" modulierende Schließen dieses Schaltelements erfolgt abhängig davon, wann durch Betätigung eines Fahrpedals ein Ausstieg aus der Standabkopplungsfunktion erfolgt. In der gestrichelten Linienführung des Signalverlaufs 18g ist dies später als in der durchgezogenen Linienführung desselben.

Der zweite Aspekt der hier vorliegenden Erfindung betrifft ein Verfahren zum Überführen eines Automatgetriebes von einer Neutralposition in einen Vorwärtsgang bzw. Rückwärtsgang, wobei in der Neutralposition alle im jeweiligen Vorwärtsgang bzw. Rückwärtsgang geschlossenen Schaltelemente ebenfalls geschlossen sind. In diesem Fall wird dann zum Gangeinlegen ein weiteres sich im Antriebsstrang befindliches Schaltelement modulierend geschlossen, wobei sich das weitere Schaltelement auch innerhalb der Getriebeeinheit befinden kann. Dieses weitere Schaltelement, welches dem Automatgetriebe vorgeschaltet oder nachgeschaltet ist, kann ein z. B. externes Anfahrelement sein. Derartige externe Anfahrelemente sind z. B. bei Parallelhybridsystemen, bei welchen ein Elektromotor und ein Verbrennungsmotor auf ein Automatgetriebe wirken, dem Automatgetriebe vorgeschaltet.

Die Alternativen des ersten Aspekts der Erfindung zur Ansteuerung der Schaltelemente beim Gangeinlegen sind mit diesem zweiten Aspekt zur Ansteuerung des weiteren Schaltelements nach dem zweiten Aspekt der Erfindung kombinierbar.

Obwohl unter Bezugnahme auf Fig. 1 und 2 die Erfindung für den bevorzugten Anwendungsfall eines Automatgetriebes mit fünf Schaltelementen, von welchen jeweils drei in einem Vorwärtsgang und einem Rückwärtsgang geschlossen sind, beschrieben wurde, sei an dieser Stelle darauf hingewiesen, dass die Erfindung auch bei Automatgetrieben mit einer größeren Anzahl von Schaltelementen verwendet werden kann, und zwar auch dann, wenn pro Gang eine größere Anzahl an Schaltelementen geschlossen ist. Für diesen Fall werden die Anzahl der offenen bzw. teilbefüllten Schaltelemente auf diese Systeme übertragen und die zusätzlichen Schaltelemente geschlossen gehalten, sodass zu dem oben beschriebenen Verfahren dann nur die Anzahl der geschlossenen Schaltelemente unterschiedlich ist.

Abschließend sei darauf hingewiesen, dass die Schaltelemente A bis E bzw. 8 bis 12, die nach dem ersten Aspekt der Erfindung angesteuert werden, auch als getriebeinterne bzw. als getrieberadsatzsysteminterne Schaltelemente bezeichnet werden können, wohingegen dann das weitere sich im Antriebsstrang befindliche Schaltelement, welches beim zweiten Aspekt der Erfindung von Bedeutung ist, als getriebeexternes bzw. als getrieberadsatzsystemexternes Schaltelement bezeichnet werden kann.

### Bezugszeichen

- 1: Getriebeschema
- 2: Getrieberadsatz
- 3: Getrieberadsatz
- 4: Getrieberadsatz
- 5: Getrieberadsatz
- 6: Getriebeeingang
- 7: Getriebeausgang
- 8: Schaltelement A
- 9: Schaltelement B
- 10: Schaltelement C
- 11: Schaltelement D
- 12: Schaltelement E
- 14: Schaltelementmatrix
- 15a: Signalverlauf
- 15b: Signalverlauf
- 15c: Signalverlauf
- 15d: Signalverlauf
- 15e: Signalverlauf
- 15f: Signalverlauf
- 16a: Signalverlauf
- 16b: Signalverlauf
- 16c: Signalverlauf
- 16d: Signalverauf
- 16e: Signalverlauf
- 16f: Signalverlauf
- 17a: Signalverlauf
- 17b: Signalverlauf
- 17c: Signalverlauf
- 17d: Signalverlauf
- 17e: Signalverlauf
- 17f: Signalverlauf
- 17g: Signalverlauf
- 18a: Signalverlauf
- 18b: Signalverlauf
- 18c: Signalverlauf
- 18d: Signalverlauf
- 18e: Signalverlauf
- 18f: Signalverlauf
- 18g: Signalverlauf

## Patentansprüche

1. Verfahren zum Betreiben eines Automatgetriebes eines Kraftfahrzeugs, insbesondere eines Stufenautomatgetriebes,
wobei das Automatgetriebe mindestens fünf Schaltelemente aufweist, zur Momentübertragung bzw. Kraftübertragung in einem Vorwärtsgang und in einem Rückwärtsgang mindestens drei Schaltelemente geschlossen sind, und beim sogenannten Gangeinlegen zur Überführung des Automatgetriebes von einer Neutralposition in einen Vorwärtsgang oder in einen Rückwärtsgang mindestens eines der im jeweiligen Vorwärtsgang bzw. Rückwärtsgang geschlossenen Schaltelemente des Automatgetriebes modulierend geschlossen wird,
**dadurch gekennzeichnet,**
**dass** zur Überführung des Automatgetriebes von der Neutralposition in den jeweiligen Vorwärtsgang bzw. Rückwärtsgang ein die Momentübertragung bzw. Kraftübertragung des Automatgetriebes herstellendes Schaltelement erst dann modulierend geschlossen wird, wenn die anderen im jeweiligen Vorwärtsgang bzw. Rückwärtsgang geschlossenen Schaltelemente bereits geschlossen sind,
wobei dann, wenn alle im jeweiligen Vorwärtsgang bzw. Rückwärtsgang geschlossenen Schaltelemente in der Neutralposition vollständig geöffnet sind, zur Überführung des Automatgetriebes von der Neutralposition in den Vorwärtsgang oder in den Rückwärtsgang zuerst mindestens zwei Schaltelemente zeitlich versetzt oder zeitlich parallel geschlossen werden,
und **dass** anschließend das die Momentübertragung bzw. Kraftübertragung des Automatgetriebes herstellende Schaltelement modulierend geschlossen wird.

2. Verfahren zum Betreiben eines Automatgetriebes eines Kraftfahrzeugs, insbesondere eines Stufenautomatgetriebes,
wobei das Automatgetriebe mindestens fünf Schaltelemente aufweist, zur Momentübertragung bzw. Kraftübertragung in einem Vorwärtsgang und in einem Rückwärtsgang mindestens drei Schaltelemente geschlossen sind, und beim sogenannten Gangeinlegen zur Überführung des Automatgetriebes von einer Neutralposition in einen Vorwärtsgang oder in einen Rückwärtsgang mindestens eines der im jeweiligen Vorwärtsgang bzw. Rückwärtsgang geschlossenen Schaltelemente des Automatgetriebes modulierend geschlossen wird,
**dadurch gekennzeichnet,**
**dass** zur Überführung des Automatgetriebes von der Neutralposition in den jeweiligen Vorwärtsgang bzw. Rückwärtsgang ein die Momentübertragung bzw. Kraftübertragung des Automatgetriebes herstellendes Schaltelement erst dann modulierend geschlossen wird, wenn die anderen im jeweiligen Vorwärtsgang bzw. Rückwärtsgang geschlossenen Schaltelemente bereits geschlossen sind,
wobei dann, wenn ein erstes der im jeweiligen Vorwärtsgang bzw. Rückwärtsgang geschlossenen Schaltelemente in der Neutralposition geschlossen ist, ein zweites der im jeweiligen Vorwärtsgang bzw. Rückwärtsgang geschlossenen Schaltelemente in der Neutralposition derart teilbefüllt ist, dass dasselbe kein oder annähend kein Drehmoment überträgt, und ein drittes der im jeweiligen Vorwärtsgang bzw. Rückwärtsgang geschlossenen Schaltelemente in der Neutralposition vollständig geöffnet ist,
zur Überführung des Automatgetriebes von der Neutralposition in den Vorwärtsgang oder in den Rückwärtsgang zuerst das zweite Schaltelement geschlossen wird.

3. Verfahren nach Anspruch 2. **dadurch gekennzeichnet, dass** anschließend das die Momentübertragung bzw. Kraftübertragung des Automatgetriebes herstellende dritte Schaltelement modulierend geschlossen wird.

4. Verfahren zum Betreiben eines Automatgetriebes eines Kraftfahrzeugs, insbesondere eines Stufenautomatgetriebes,
wobei das Automatgetriebe mindestens fünf Schaltelemente aufweist, zur Momentübertragung bzw. Kraftübertragung in einem Vorwärtsgang und in einem Rückwärtsgang mindestens drei Schaltelemente geschlossen sind, und beim sogenannten Gangeinlegen zur Überführung des Automatgetriebes von einer Neutralposition in einen Vorwärtsgang oder in einen Rückwärtsgang mindestens eines der im jeweiligen Vorwärtsgang bzw. Rückwärtsgang geschlossenen Schaltelemente des Automatgetriebes modulierend geschlossen wird,
**dadurch gekennzeichnet,**
**dass** zur Überführung des Automatgetriebes von der Neutralposition in den jeweiligen Vorwärtsgang bzw. Rückwärtsgang ein die Momentübertragung bzw. Kraftübertragung des Automatgetriebes herstellendes Schaltelement erst dann modulierend geschlossen wird, wenn die anderen im jeweiligen Vorwärtsgang bzw. Rückwärtsgang geschlossenen Schaltelemente bereits geschlossen sind,
wobei dann, wenn ein erstes der im jeweiligen Vorwärtsgang bzw. Rückwärtsgang geschlossenen Schaltelemente in der Neutralposition geschlossen ist, ein zweites der im jeweiligen Vorwärtsgang bzw. Rückwärtsgang geschlossenen Schaltelemente in der Neutralposition derart teilbefüllt ist, dass dasselbe kein oder annähend kein Drehmoment überträgt, und ein drittes der im jeweiligen Vorwärtsgang bzw. Rückwärtsgang geschlossenen Schaltelemente in der Neutralposition vollständig geöffnet ist,
zur Überführung des Automatgetriebes von der Neutralposition in den Vorwärtsgang oder in den Rückwärtsgang zuerst das dritte Schaltelement geschlossen.

5. Verfahren nach Anspruch 4, **dadurch gekennzeichnet, dass** anschließend das die Momentübertragung bzw. Kraftübertragung des Automatgetriebes herstellende zweite Schaltelement modulierend geschlossen wird.

6. Verfahren zum Betreiben eines Automatgetriebes eines Kraftfahrzeugs, insbesondere eines Stufenautomatgetriebes,
wobei das Automatgetriebe mindestens fünf Schaltelemente aufweist, zur Momentübertragung bzw. Kraftübertragung in einem Vorwärtsgang und in einem Rückwärtsgang mindestens drei Schaltelemente geschlossen sind, und beim sogenannten Gangeinlegen zur Überführung des Automatgetriebes von einer Neutralposition in einen Vorwärtsgang oder in einen Rückwärtsgang mindestens eines der im jeweiligen Vorwärtsgang bzw. Rückwärtsgang geschlossenen Schaltelemente des Automatgetriebes modulierend geschlossen wird,
**dadurch gekennzeichnet,**
**dass** zur Überführung des Automatgetriebes von der Neutralposition in den jeweiligen Vorwärtsgang bzw. Rückwärtsgang ein die Momentübertragung bzw. Kraftübertragung des Automatgetriebes herstellendes Schaltelement erst mann modulierend geschlossen wird, wenn die anderen im jeweiligen Vorwärtsgang bzw. Rückwärtsgang geschlossenen Schaltelemente bereits geschlossen sind,
wobei dann, wenn ein erstes der im jeweiligen Vorwärtsgang bzw. Rückwärtsgang geschlossenen Schaltelemente in der Neutralposition geschlossen ist, und ein zweites und ein drittes der im jeweiligen Vorwärtsgang bzw. Rückwärtsgang geschlossenen Schaltelemente in der Neutralposition vollständig geöffnet sind,
zur Überführung des Automatgetriebes von der Neutralposition in den Vorwärtsgang oder in den Rückwärtsgang das zweite und dritte Schaltelement in einen teilbefüllten Zustand überführt werden, in welchem dieselben kein oder annähend kein Drehmoment übertragen,
wobei eines der beiden teilbefüllten Schaltelemente geschlossen und anschließend das andere, die Momentübertragung bzw. Kraftübertragung des Automatgetriebes herstellende der beiden teilbefüllten Schaltelemente modulierend geschlossen wird.

7. Verfahren zum Betreiben eines Automatgetriebes eines Kraftfahrzeugs, insbesondere eines Stufenautomatgetriebes,
wobei das Automatgetriebe mindestens fünf Schaltelemente aufweist,
und wobei zur Momentübertragung bzw. Kraftübertragung in einem Vorwärtsgang und in einem Rückwärtsgang mindestens drei Schaltelemente geschlossen sind,
und wobei dem Automatgetriebe ein weiteres Schaltelement, insbesondere ein Anfahrelement, zugeordnet ist, welches sich im Antriebsstrang befindet und dem Automatgetriebe vorgeschaltet oder nachgeschaltet ist und zur Momentübertragung bzw. Kraftübertragung im Vorwärtsgang bzw. Rückwärtsgang ebenfalls geschlossen ist,
**dadurch gekennzeichnet,**
**dass** beim so genannten Gangeinlegen zur Überführung des Automatgetriebes von einer Neutralposition in einen Vorwärtsgang oder in einen RGckwärtsgang alle im jeweiligen Vorwärtsgang bzw. Rückwärtsgang geschlossenen Schaltelemente des Automatgetriebes in der Neutralposition geschlossen sind und das weitere sich im Antriebsstrang befindliche Schaltelement beim Gangeinlegen modulierend geschlossen wird.

8. Verfahren zum Betreiben eines Automatgetriebes eines Kraftfahrzeugs, insbesondere eines Stufenautomatgetriebes,
wobei das Automatgetriebe mindestens fünf Schaltelemente aufweist,
und wobei zur Momentübertragung bzw. Kraftübertragung in einem Vorwärtsgang und in einem Rückwärtsgang mindestens drei Schaltelemente geschlossen sind,
und wobei beim sogenannten reversierenden Gangeinlegen zur Überführung des Automatgetriebes von einem Rückwärtsgang in, einen Vorwärtsgang oder von einem Vorwärtsgang in einen Rückwärtsgang mindestens eines der im einzulegenden Vorwärtsgang bzw. Rückwärtsgang geschlossenen Schaltelemente des Automatgetriebes modulierend geschlossen wird,
**dadurch gekennzeichnet,**
**dass** ein erstes Schaltelement dauerhaft geschlossen bleibt,
**dass** ein zweites Schaltelement zur Ausführung des reversierenden Gangeinlegens vom geschlossenen Zustand zwischenzeitlich in einen teilbefüllten Zustand überführt wird, in welchem das zweite Schaltelement kein oder annähernd kein Drehmoment überträgt,
wobei während dieses Zeitraums, in welchem das zweite Schaltelement kein oder annähernd kein Drehmoment überträgt, ein Wechsel zwischen dritten Schaltelernenten durchgeführt wird,
und **dass** anschließend das zweite Schaltelement modulierend geschlossen wird.

## Claims

1. Method for operating an automatic gearbox of a motor vehicle, in particular a multi-step automatic gearbox,
wherein the automatic gearbox has at least five shift elements, wherein at least three shift elements are closed in order to transmit torque or transmit force in a forward gear and in a reverse gear, and wherein during a so-called gear engagement for moving the automatic gearbox from a neutral position into a forward gear or into a reverse gear, at least one of the shift elements of the automatic gearbox which are closed in the respective forward gear or reverse gear is closed in a modulated fashion,
**characterized**
**in that**, to move the automatic gearbox from the neutral position into the respective forward gear or reverse gear, a shift element which produces the transmission of torque or transmission of force of the automatic gearbox is closed in a modulated fashion only when the other shift elements which are closed in the respective forward gear or reverse gear are already closed,
wherein, when all of the shift elements which are closed in the respective forward gear or reverse gear are fully open in the neutral position, firstly at least two shift elements are closed in an offset manner in terms of time or in parallel in terms of time in order to move the automatic gearbox from the neutral position into the forward gear or into the reverse gear,
and **in that**, subsequently, the shift element which produces the transmission of torque or transmission of force of the automatic gearbox is closed in a modulated fashion.

2. Method for operating an automatic gearbox of a motor vehicle, in particular a multi-step automatic gearbox,
wherein the automatic gearbox has at least five shift elements, wherein at least three shift elements are closed in order to transmit torque or transmit force in a forward gear and in a reverse gear, and wherein during a so-called gear engagement for moving the automatic gearbox from a neutral position into a forward gear or into a reverse gear, at least one of the shift elements of the automatic gearbox which are closed in the respective forward gear or reverse gear is closed in a modulated fashion,
**characterized**
**in that,** to move the automatic gearbox from the neutral position into the respective forward gear or reverse gear, a shift element which produces the transmission of torque or transmission of force of the automatic gearbox is closed in a modulated fashion only when the other shift elements which are closed in the respective forward gear or reverse gear are already closed,
wherein, when a first one of the shift elements which are closed in the respective forward gear or reverse gear is closed in the neutral position, a second one of the shift elements which are closed in the respective forward gear or reverse gear is partially filled in the neutral position in such a way that said second one of the shift elements can transmit no torque or approximately no torque, and a third one of the shift elements which are closed in the respective forward gear or reverse gear is fully open in the neutral position,
in order to move the automatic gearbox from the neutral position into the forward gear or into the reverse gear, firstly the second shift element is closed.

3. Method according to Claim 2, **characterized**
**in that,** subsequently, the third shift element which produces the transmission of torque or transmission of force of the automatic gearbox is closed in a modulated fashion.

4. Method for operating an automatic gearbox of a motor vehicle, in particular a multi-step automatic gearbox,
wherein the automatic gearbox has at least five shift elements, wherein at least three shift elements are closed in order to transmit torque or transmit force in a forward gear and in a reverse gear, and wherein during a so-called gear engagement for moving the automatic gearbox from a neutral position into a forward gear or into a reverse gear, at least one of the shift elements of the automatic gearbox which are closed in the respective forward gear or reverse gear is closed in a modulated fashion,
**characterized**
**in that**, to move the automatic gearbox from the neutral position into the respective forward gear or reverse gear, a shift element which produces the transmission of torque or transmission of force of the automatic gearbox is closed in a modulated fashion only when the other shift elements which are closed in the respective forward gear or reverse gear are already closed,
wherein, when a first one of the shift elements which are closed in the respective forward gear or reverse gear is closed in the neutral position, a second one of the shift elements which are closed in the respective forward gear or reverse gear is partially filled in the neutral position in such a way that said second one of the shift elements can transmit no torque or approximately no torque, and a third one of the shift elements which are closed in the respective forward gear or reverse gear is fully open in the neutral position,
in order to move the automatic gearbox from the neutral position into the forward gear or into the reverse gear, firstly the third shift element is closed.

5. Method according to Claim 4, **characterized**
**in that,** subsequently, the second shift element which produces the transmission of torque or transmission of force of the automatic gearbox is closed in a modulated fashion.

6. Method for operating an automatic gearbox of a motor vehicle, in particular a multi-step automatic gearbox,
wherein the automatic gearbox has at least five shift elements, wherein at least three shift elements are closed in order to transmit torque or transmit force in a forward gear and in a reverse gear, and wherein during a so-called gear engagement for moving the automatic gearbox from a neutral position into a forward gear or into a reverse gear, at least one of the shift elements of the automatic gearbox which are closed in the respective forward gear or reverse gear is closed in a modulated fashion,
**characterized**
**in that,** to move the automatic gearbox from the neutral position into the respective forward gear or reverse gear, a shift element which produces the transmission of torque or transmission of force of the automatic gearbox is closed in a modulated fashion only when the other shift elements which are closed in the respective forward gear or reverse gear are already closed,
wherein, when a first one of the shift elements which are closed in the respective forward gear or reverse gear is closed in the neutral position, and a second one and a third one of the shift elements which are closed in the respective forward gear or reverse gear are fully open in the neutral position,
in order to move the automatic gearbox from the neutral position into the forward gear or into the reverse gear, the second and third shift elements are placed into a partially filled state in which said second and third shift elements can transmit no torque or approximately no torque,
wherein one of the two partially filled shift elements is closed and, subsequently, the other one of the two partially filled shift elements which produces the transmission of torque or transmission of force of the automatic gearbox is closed in a modulated fashion.

7. Method for operating an automatic gearbox of a motor vehicle, in particular a multi-step automatic gearbox,
wherein the automatic gearbox has at least five shift elements, and wherein at least three shift elements are closed in order to transmit torque or transmit force in a forward gear and in a reverse gear,
and wherein the automatic gearbox is assigned a further shift element, in particular a starting element, which is situated in the drivetrain and which is positioned upstream or downstream of the automatic gearbox and which is likewise closed for the transmission of torque or transmission of force in the forward gear or reverse gear,
**characterized**
**in that**, during a so-called gear engagement for moving the automatic gearbox from a neutral position into a forward gear or into a reverse gear, all of the shift elements of the automatic gearbox which are closed in the respective forward gear or reverse gear are closed in the neutral position and the further shift element which is situated in the drivetrain is closed in a modulated fashion during the gear engagement.

8. Method for operating an automatic gearbox of a motor vehicle, in particular a multi-step automatic gearbox,
wherein the automatic gearbox has at least five shift elements, and wherein at least three shift elements are closed in order to transmit torque or transmit force in a forward gear and in a reverse gear,
and wherein, during a so-called reversing gear engagement for moving the automatic gearbox from a reverse gear into a forward gear or from a forward gear into a reverse gear, at least one of the shift elements of the automatic gearbox which are closed in the forward gear or reverse gear to be engaged is closed in a modulated fashion,
**characterized**
**in that** a first shift element remains closed permanently,
**in that**, in order to perform the reversing gear engagement, a second shift element is temporarily moved from the closed state into a partially filled state in which the second shift element transmits no torque or approximately no torque,
wherein a switch between third shift elements is carried out during said time period in which the second shift element transmits no torque or approximately no torque,
and **in that**, subsequently, the second shift element is closed in a modulated fashion.

## Revendications

1. Procédé pour faire fonctionner une boîte de vitesses automatique d'un véhicule automobile, notamment une boîte de vitesses automatique à étages, dans lequel la boîte de vitesses automatique présente au moins cinq éléments de changement de vitesse, au moins trois éléments de changement de vitesse étant fermés pour le transfert de couple ou le transfert de force dans une vitesse avant et dans une vitesse arrière, et lors de l'enclenchement de vitesse pour le passage de la boîte de vitesses automatique d'une position neutre dans une vitesse avant ou dans une vitesse arrière, au moins l'un des éléments de changement de vitesse de la boîte de vitesses automatique fermés dans la vitesse avant ou la vitesse arrière respective étant fermé avec modulation,
**caractérisé en ce que**
pour le passage de la boîte de vitesses automatique de la position neutre dans la vitesse avant ou la vitesse arrière respective, un élément de changement de vitesse produisant le transfert de couple ou le transfert de force de la boîte de vitesses automatique est seulement fermé avec modulation lorsque les autres éléments de changement de vitesse fermés dans la vitesse avant ou la vitesse arrière respective sont déjà fermés, lorsque tous les éléments de changement de vitesse fermés dans la vitesse avant ou la vitesse arrière respective sont complètement ouverts dans la position neutre, pour le passage de la boîte de vitesses automatique de la position neutre dans la vitesse avant ou dans la vitesse arrière, au moins deux éléments de changement de vitesse étant d'abord fermés de manière décalée dans le temps ou en parallèle,
et **en ce que** l'élément de changement de vitesse produisant le transfert de couple ou le transfert de force de la boîte de vitesses automatique est ensuite fermé avec modulation.

2. Procédé pour faire fonctionner une boîte de vitesses automatique d'un véhicule automobile, notamment d'une boîte de vitesses automatique à étages, dans lequel la boîte de vitesses automatique présente au moins cinq éléments de changement de vitesse, au moins trois éléments de changement de vitesse étant fermés pour le transfert de couple ou le transfert de force dans une vitesse avant et dans une vitesse arrière, et lors de l'enclenchement de vitesse pour le passage de la boîte de vitesses automatique d'une position neutre dans une vitesse avant ou dans une vitesse arrière, au moins l'un des éléments de changement de vitesse de la boîte de vitesses automatique fermés dans la vitesse avant ou la vitesse arrière respective étant fermé avec modulation,
**caractérisé en ce que**
pour le passage de la boîte de vitesses automatique de la position neutre dans la vitesse avant ou la vitesse arrière respective, un élément de changement de vitesse produisant le transfert de couple ou le transfert de force de la boîte de vitesses automatique est seulement fermé avec modulation lorsque les autres éléments de changement de vitesse fermés dans la vitesse avant ou la vitesse arrière respective sont déjà fermés, lorsqu'un premier des éléments de changement de vitesse fermés dans la vitesse avant ou la vitesse arrière respective est fermé dans la position neutre, un deuxième des éléments de changement de vitesse fermés dans la vitesse avant ou la vitesse arrière respective étant partiellement rempli dans la position neutre, de telle sorte que celui-ci ne transmette pas ou pratiquement pas de couple, et un troisième des éléments de changement de vitesse fermés dans la vitesse avant ou la vitesse arrière respective étant complètement ouvert dans la position neutre,
le deuxième élément de changement de vitesse étant d'abord fermé pour le passage de la boîte de vitesses automatique de la position neutre dans la vitesse avant ou dans la vitesse arrière.

3. Procédé selon la revendication 2, **caractérisé en ce qu'**ensuite, le troisième élément de changement de vitesse produisant le transfert de couple ou le transfert de force de la boîte de vitesses automatique est fermé avec modulation.

4. Procédé pour faire fonctionner une boîte de vitesses automatique d'un véhicule automobile, en particulier une boîte de vitesses automatique à étages,
dans lequel la boîte de vitesses automatique présente au moins cinq éléments de changement de vitesse, au moins trois éléments de changement de vitesse étant fermés pour le transfert de couple ou le transfert de force dans une vitesse avant et dans une vitesse arrière, et lors de l'enclenchement de vitesse pour le passage de la boîte de vitesses automatique d'une position neutre dans une vitesse avant ou dans une vitesse arrière, au moins l'un des éléments de changement de vitesse de la boîte de vitesses automatique fermés dans la vitesse avant ou la vitesse arrière respective étant fermé avec modulation,
**caractérisé en ce que**
pour le passage de la boîte de vitesses automatique de la position neutre dans la vitesse avant ou la vitesse arrière respective, un élément de changement de vitesse produisant le transfert de couple ou le transfert de force de la boîte de vitesses automatique est seulement fermé avec modulation lorsque les autres éléments de changement de vitesse fermés dans la vitesse avant ou la vitesse arrière respective sont déjà fermés, lorsqu'un premier des éléments de changement de vitesse fermés dans la vitesse avant ou la vitesse arrière respective est fermé dans la position neutre, un deuxième des éléments de changement de vitesse fermés dans la vitesse avant ou la vitesse arrière respective étant partiellement rempli dans la position neutre de telle sorte que celui-ci ne transmette aucun couple ou pratiquement aucun couple, et un troisième des éléments de changement de vitesse fermés dans la vitesse avant ou la vitesse arrière respective étant complètement ouvert dans la position neutre,
le troisième élément de changement de vitesse étant d'abord fermé pour le passage de la boîte de vitesses automatique de la position neutre dans la vitesse avant ou la vitesse arrière.

5. Procédé selon la revendication 4, **caractérisé en ce qu'**ensuite le deuxième élément de changement de vitesse produisant le transfert de couple ou le transfert de force de la boîte de vitesses automatique est fermé avec modulation.

6. Procédé pour faire fonctionner une boîte de vitesses automatique d'un véhicule automobile, en particulier une boîte de vitesses automatique à étages,
dans lequel la boîte de vitesses automatique présente au moins cinq éléments de changement de vitesse, au moins trois éléments de changement de vitesse étant fermés pour le transfert de couple ou le transfert de force dans une vitesse avant et dans une vitesse arrière, et lors de l'enclenchement de vitesse pour le passage de la boîte de vitesses automatique d'une position neutre dans une vitesse avant ou dans une vitesse arrière, au moins l'un des éléments de changement de vitesse de la boîte de vitesses automatique fermés dans la vitesse avant ou la vitesse arrière respective étant fermé avec modulation,
**caractérisé en ce que**
pour le passage de la boîte de vitesses automatique de la position neutre dans la vitesse avant ou la vitesse arrière respective, un élément de changement de vitesse produisant le transfert de couple ou le transfert de force de la boîte de vitesses automatique est seulement fermé avec modulation lorsque les autres éléments de changement de vitesse fermés dans la vitesse avant ou la vitesse arrière respective sont déjà fermés, lorsqu'un premier des éléments de changement de vitesse fermés dans la vitesse avant ou la vitesse arrière respective est fermé dans la position neutre, et un deuxième et un troisième des éléments de changement de vitesse fermés dans la vitesse avant ou dans la vitesse arrière respective étant complètement ouverts dans la position neutre,
le deuxième et le troisième élément de changement de vitesse, pour le passage de la boîte de vitesses automatique de la position neutre dans la vitesse avant ou la vitesse arrière étant transférés dans un état partiellement rempli dans lequel ceux-ci ne transmettent aucun couple ou pratiquement aucun couple,
l'un des deux éléments de changement de vitesse partiellement rempli étant fermé et ensuite l'autre des deux éléments de changement de vitesse partiellement remplis, produisant le transfert de couple ou le transfert de force de la boîte de vitesses automatique, étant fermé avec modulation.

7. Procédé pour faire fonctionner une boîte de vitesses automatique d'un véhicule automobile, notamment une boîte de vitesses automatique à étages, dans lequel la boîte de vitesses automatique présente au moins cinq éléments de changement de vitesse, et dans lequel, au moins trois éléments de changement de vitesse sont fermés pour le transfert de couple ou le transfert de force dans une vitesse avant et dans une vitesse arrière,
et dans lequel on associe à la boîte de vitesses automatique un autre élément de changement de vitesse, en particulier un élément de démarrage, qui se trouve dans la chaîne de transmission et qui est monté avant la boîte de vitesses automatique ou après elle et qui est également fermé pour le transfert de couple ou le transfert de force dans la vitesse avant ou la vitesse arrière,
**caractérisé en ce que**
lors de l'enclenchement de vitesse pour le passage de la boîte de vitesses automatique d'une position neutre dans une vitesse avant ou dans une vitesse arrière, tous les éléments de changement de vitesse de la boîte de vitesses automatique fermés dans la vitesse avant ou la vitesse arrière respective étant fermés dans la position neutre et l'autre élément de changement de vitesse se trouvant dans la chaîne de transmission étant fermé avec modulation lors de l'enclenchement de la vitesse.

8. Procédé pour faire fonctionner une boîte de vitesses automatique d'un véhicule automobile, en particulier une boîte de vitesses automatique à étages,
dans lequel la boîte de vitesses automatique présente au moins cinq éléments de changement de vitesse, et dans lequel, au moins trois éléments de changement de vitesse sont fermés pour le transfert de couple ou le transfert de force dans une vitesse avant et dans une vitesse arrière,
et dans lequel lors de l'enclenchement de vitesse dit d'inversion pour le passage de la boîte de vitesses automatique d'une vitesse arrière dans une vitesse avant ou d'une vitesse avant dans une vitesse arrière, au moins l'un des éléments de changement de vitesse de la boîte de vitesses automatique fermés dans la vitesse avant ou la vitesse arrière à enclencher est fermé avec modulation,
**caractérisé en ce qu'**un premier élément de changement de vitesse reste fermé de manière durable,
**en ce qu'**un deuxième élément de changement de vitesse est transféré pour effectuer l'enclenchement d'inversion, de l'état fermé temporairement dans un état partiellement rempli, dans lequel le deuxième élément de changement de vitesse ne transmet pas de couple ou pratiquement pas de couple,
un changement entre des troisièmes éléments de changement de vitesse étant effectué pendant cet intervalle de temps, dans lequel le deuxième élément de changement de vitesse ne transmet pas ou pratiquement pas de couple,
et **en ce qu'**ensuite, le deuxième élément de changement de vitesse est fermé avec modulation.
